# EUROPEAN PATENT APPLICATION

(11) **EP 4 289 719 A1**
(43) Date of publication of application: **13.12.2023**
(21) Application number: 22213459.5
(22) Date of filing: 14.12.2022
(51) Int. Cl.: B63B 29/02, E03D 11/10

(54) **DRY TOILET WITH INTEGRATED FLUSHING FUNCTION**

(30) Priority: 08.06.2022 EP 22177973
(71) Applicant: Ecosave BV, 8256 PP Biddinghuizen (NL)
(72) Inventor: VANDY, Daniël Marion Henry, 8256 PP Biddinghuizen (NL)
(74) Representative: Plaggenborg, Menko Bernard

(57) **Abstract**

A dry toilet, comprising a housing with a seat, a receptacle for solid faeces and a receptacle for urine, wherein the receptacle for urine is coupled to a discharge device for discharging the urine from the dry toilet, wherein furthermore a flushing liquid supply is provided for flushing at least one of the receptacle for urine and the discharge device for discharging the urine.

## Description

The present invention relates to a toilet having a housing with a seat, a solid faeces receptacle and a urine receptacle according to claim 1.

Such a toilet is known in the art. This is often used in caravans, boats and the like. They are also regularly used as temporary toilets.

Such a toilet has the disadvantage that chemicals are used for the treatment of the urine and solid faeces. Discharging them into surface water or otherwise into nature is not permitted. A user must therefore regularly look for a place to drain the contents of the reservoir of such a toilet.

No suitable solution to these problems is known in the art.

The invention now has for its object to provide an improved toilet of the type mentioned in the preamble.

In particular, the invention has for its object to provide a toilet of the type mentioned in the preamble which is simple to use.

The invention also aims to provide an improved toilet that provides a suitable pre-cleaning with which at least part of the separated substances can be discharged into surface water.

It is also an object of the invention to provide a toilet with which the solid excrements can be collected and held without further treatment.

In order to obtain at least one of the advantages mentioned above, the invention according to a first embodiment provides a toilet comprising the features of claim 1. This toilet has the advantage that the urine can be discharged directly into surface water, which is a great advantage in both pleasure craft and commercial shipping.

It has also been found that the toilet according to the invention is hygienic. Such a synergistic effect is an advantage.

The invention therefore relates to a dry toilet comprising a housing with a seat, a receptacle for solid excrements and a receptacle for urine, wherein the receptacle for urine is coupled to a discharge device for discharging the urine from the dry toilet.

According to the invention, a flushing liquid supply is provided in the dry toilet for flushing the urine receptacle or for flushing the urine discharge device. This provides an advantage with regard to the possibilities of discharging part of the materials obtained after a visit to the toilet, namely the urine, into the surface water. Such a discharge of urine is permitted under the European environmental law applicable in 2022, so that the toilet according to the invention offers a solution for all pleasure craft and commercial shipping in Europe. The amount of waste materials that have to be stored on the ship is greatly reduced with the toilet according to the invention. Hygiene is also improved because of the flushing away of substances from the urine receiving facility, which counteracts odor formation.

A simple toilet that takes up little space is obtained when the flushing liquid supply is at least partially integrated in the housing.

Preferably, the urine receptacle, also identified as urine receiving device, has a funnel shape, the narrow part of which is connected to the drainage device for draining the urine. As a result, the urine flows in a certain way automatically into the discharge device when using the toilet.

Furthermore, within the invention it is preferred that a pump is provided for supplying flushing liquid, for instance water, to the receiving device for urine or to the discharge device for discharging the urine from the dry toilet. For example, the pump can be activated manually by the user or automatically after use.

A suitable operation is obtained when a pump for discharging liquid to a waste water tank is provided in the discharge device for discharging the urine or downstream thereof.

Using the toilet is very easy when the seat is positioned above and at least partially around the receptacles for solid faeces and urine. Placing the solid waste receptacle at the rear of the toilet (i.e. the side to which a user's back faces) and the urine receptacle at the front (near the user's lower legs) both types of secretions are automatically collected and disposed of correctly.

According to a further variant, it is preferred that an opening from the environment to the receiving facility for solid excrements comprises an adjustable barrier formed by a number of slats which can be moved between a position closing the opening and a position releasing the opening, wherein the slats are nested at a position outside the opening in the releasing state. As a result, the solid excrement can be closed off from the room where the user is, so that odors cannot enter said room.

In particular, it is preferred that the housing comprises an inner wall which extends at least partially from an upper side to the opening for the solid excrement receiving facility and the slats are located under the inner wall in the nested condition.

In order to make the toilet extremely suitable for use in boats and caravans, it is preferable that the housing is designed for attachment to a surface, for instance by means of screws or clamps.

To further make the toilet suitable for use in a boat or caravan, it is also preferred that the housing has an upper side where the seat is located and a lower side where it can be placed on a surface, and has a tapered or convex shape of the top to the bottom. The shape of the toilet offers the possibility of placing the toilet tightly against the hull of the vessel, which has a concave shape, especially in boats, and against which the convex shape of the toilet can be placed.

An automated operation of the toilet can be obtained when the housing comprises a top edge on which the seat is placed, which top edge comprises a weight sensor for detecting a user, which weight sensor is connected to a processor for processing a signal from the weight sensor and controlling an air pump for extracting air from the dry toilet to a filter and/or to the environment. As a result, no odors will spread in the room where the user is, which improves comfort and hygiene.

Similarly, a facility can be provided wherein the housing includes a top edge on which the seating facility is placed, which top edge includes a weight sensor for detecting a user, which weight sensor is connected to a processor for processing a signal from the weight sensor and the driving a motor for moving a number of slats between a position closing the opening and a position releasing the opening. This in particular increases comfort and hygiene before and after use.

A suitable treatment of the urine to dilute it suitable for discharge into the surface water is obtained when, after using the toilet, the pump moves urine in a first step to the urine receiving facility and in a second step pumps the flushing liquid and the urine to a holding tank or to the environment.

The invention will be explained in more detail below with reference to a drawing. The drawing shows in:
Fig. 1 a perspective view of the toilet according to the invention,
Fig. 2 a cross-section from the front of the toilet according to the invention, and
Fig. 3 shows a section from the left side of the toilet according to the invention.

In the figures, the same parts are designated by the same reference numerals. However, not all parts necessary for a practical implementation of the invention are shown, for simplicity of presentation.

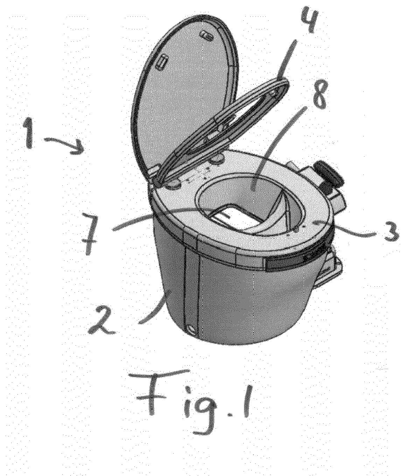

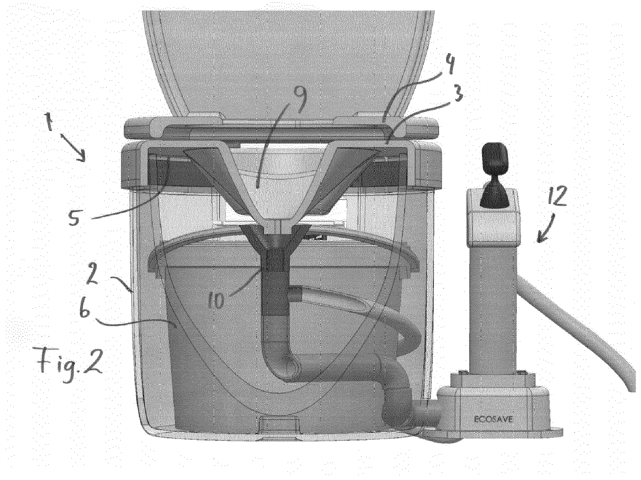

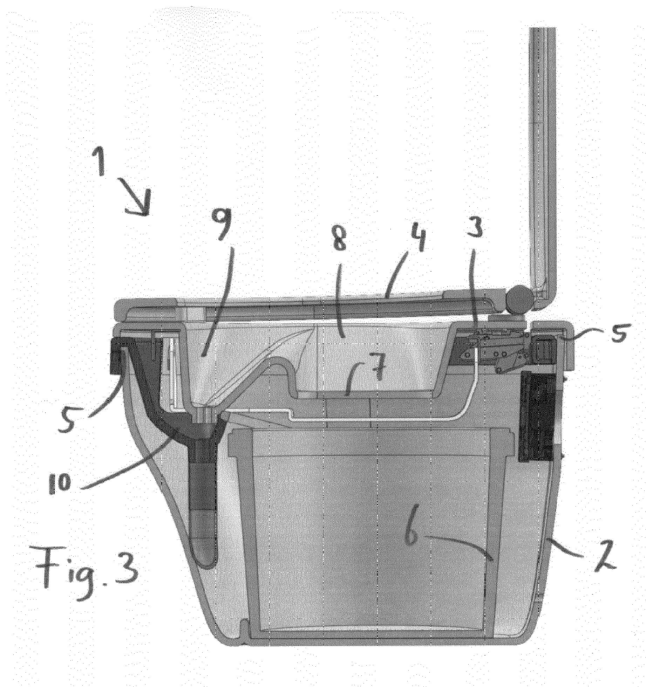

Fig. 1 shows a dry toilet 1 with a housing 2, a top surface 3 on which a seat 4, also referred to as a toilet seat, can be placed. The housing 2 has an upper edge 5 on which the upper surface 3 can be placed. The top surface extends approximately below the toilet seat 4 and serves to close off the inside of the housing 2 from the environment. A container 6 (see Fig. 2 and Fig. 3) is placed in the housing as a receptacle for the collection of solid excrement. This container 6 is located below an opening 7 in the housing 2. The opening 7 is formed by an inner wall 8 which extends from the top edge 5 to the opening 7. A receptacle 9 for urine is also provided on part of the inner wall of the housing. the housing 2 and which is operatively coupled to a drain device 10 for draining the urine from the toilet 1.

The urine discharge device 10 opens into or is connected to a discharge conduit 11 leading to a discharge pump 12 for discharge of the urine.

Fig. 2 shows a supply for rinsing liquid, which in the figure is connected to the discharge facility 10. After use of the toilet, the liquid flushes the pipe and dilutes the urine, making it suitable for discharge into surface water.

The pump 12 may have a combined function of supplying rinsing or flushing fluid to the discharge device 10 and for discharging urine and flushing fluid to a holding tank or the surface water, moving fluid in a first step to the urine receiving device and in a second step the flushing liquid and the urine is pumped to a waste water tank or to the environment.

The invention is not limited to the embodiments described above and shown in the figures. The invention is limited only by the appended claims.

The invention also extends to any combination of features described above independently of each other.

## Claims

1. A dry toilet, comprising a housing with a seat, a receptacle for solid faeces and a receptacle for urine, wherein the receptacle for urine is coupled to a discharge device for discharging the urine from the dry toilet, wherein furthermore a flushing liquid supply is provided for flushing at least one of the receptacle for urine and the discharge device for discharging the urine.

2. A dry toilet according to claim 1, wherein the flushing liquid supply is at least partially integrated in the housing.

3. A dry toilet according to claim 1, wherein the receptacle for urine has a funnel shape, the narrow part being connected to the discharge device for discharging the urine.

4. A dry toilet according to claim 1, wherein the housing is designed for attachment to a subsurface.

5. A dry toilet according to claim 1, wherein a pump is provided for supplying flushing liquid, for instance water, to the receptacle for urine.

6. A dry toilet according to claim 1, wherein a pump for discharging liquid to a waste water tank is provided in the discharge device for discharging the urine.

7. A dry toilet according to claim 1, wherein the seat is positioned above and at least partially around the receptacle for solid faeces and the receptacle for urine.

8. A dry toilet according to claim 7, wherein an opening from the environment to the receptacle for solid faeces comprises an adjustable barrier formed by a plurality of slats which can be moved between a position closing the opening and a position releasing the opening, wherein the slats are nested at a position outside the opening in the releasing position.

9. A dry toilet as claimed in claim 8, wherein the housing comprises an inner wall which extends at least partially from an upper side to the opening for the receptacle for solid faeces and the slats are located below the inner wall in the nested position.

10. A dry toilet according to claim 1, wherein the housing has a top where the seat is located and a bottom where it can be placed on a subsurface, and has a tapered or convex shape from the top to the bottom.

11. A dry toilet according to claim 1, wherein the housing comprises a top edge on which the seat is placed, which top edge comprises a weight sensor for detecting a user, which weight sensor is connected to a processor for processing a signal of the weight sensor and driving an air pump for extracting air from the dry toilet to a filter and/or to the environment.

12. A dry toilet according to claim 1 and claim 8, wherein the housing comprises a top edge on which the seat is placed, the top edge comprising a weight sensor for detecting a user, the weight sensor being connected to a processor for processing a signal from the weight sensor and driving a motor for moving a plurality of slats between a position closing the opening and a position releasing the opening.

13. A dry toilet according to claims 5 and 6, wherein the pump, after use of the toilet, in a first step moves liquid to the receptacle for urine and in a second step pumps the flushing liquid and the urine to a waste water tank or to the environment.
